Europäisches Patentamt

European Patent Office

Office européen des brevets

(19)

(11) Veröffentlichungsnummer: **0 003 233**
**B1**

(12) **EUROPÄISCHE PATENTSCHRIFT**

(21) Anmeldenummer: **78101775.1**

(22) Anmeldetag: **20.12.78**

(51) Int. Cl.³: **B 60 J 3/02**

(54) Lagerböckchen für Fahrzeugsonnenblenden

(30) Priorität: **28.01.78 D.E. 2803731**

(43) Veröffentlichungstag der Anmeldung:
**08.08.79 Patentblatt 79/16**

(45) Bekanntmachung des Hinweises auf die Patenterteilung:
**28.05.80 Patentblatt 80/11**

(84) Benannte Vertragsstaaten:
**FR GB IT SE**

(56) Entgegenhaltungen:
**DE - U - 1 898 784**
**DE - U - 7 813 819**

(73) Patentinhaber: **Gebr. Happich GmbH**
**Neuenteich 62/76**
**D - 5600 Wuppertal 1 (DE)**

(72) Erfinder: **Meissner, Wolfgang**
**Eickenstrasse 3**
**D - 5802 Wetter 4 (DE)**
**Viertel, Lothar**
**Scottweg 67**
**D - 5600 Wuppertal 11 (DE)**

Courier Press, Leamington Spa, England.

Lagerböckchen für Fahrzeugsonnenblenden

Die Erfindung betrifft ein Lagerböckchen für Fahrzeugsonnenblenden, welches als Kunststoffspritzgußteil ausgeführt ist und zwei angeformte, eine Sonnenblendenachse klammerartig umgreifende Arme aufweist, deren einander zugewandte Seiten eine hinterschnittene Lageröffnung für die Sonnenblendenachse und einen deren wiederholtes Einstecken in die Lageröffnung ermöglichenden Einführungsschlitz bilden, der etwa parallel zur Anlageebene des Lagerböckchens an einer Fahrzeugkarosserie verläuft.

Derartige Lagerböckchen dienen für Sonnenblenden, die sowohl klappbar vor der Frontscheibe von Fahrzeugen gelagert sind, als auch über ein Schwenklager zur Seitenscheibe hin verschwenkt werden können und werden im allgemeinen als Fang- oder Gegenlager bezeichnet, weil sie die Sonnenblendenachse an dem dem Schwenklager abgewandten Endbereich lagern, wenn sich der Sonnenblendenkörper vor der Frontscheibe befindet. Die bekannten Lagerböckchen der in Rede stehenden Art sind relativ starr ausgebildet und besitzen den Nachteil, daß sie bei niedrigen Temperaturen funktionsuntüchtig werden, weil sich dann nämlich die Sonnenblendenachse nicht oder nur unter erhöhtem Kraftaufwand aus der Lageröffnung herausziehen läßt. Beim Herausziehen der Lagerachse mit relativ großem Kraftaufwand besteht die Gefahr, daß die Folie, mit der die Lagerachse im Gegenlagerbereich im allgemeinen verkleidet ist, beschädigt wird. Andererseits hat sich bei den bekannten Lagerböckchen gezeigt, daß sie bei relativ großer Wärme eine nur geringe Standfestigkeit besitzen.

Der Erfindung liegt hiernach die Aufgabe zugrunde, die aufgezeigten Mängel abzustellen und ein Lagerböckchen zu schaffen, das sowohl bei Kälte als auch bei Wärme eine den technischen Anforderungen vollauf genügende Funktionstüchtigkeit besitzt.

Diese Aufgabe wird erfindungsgemäß dadurch gelöst, daß der der Anlageebene benachbarte Arm federelastisch in Richtung zur Anlageebene verschwenkbar ist. Durch diese erfindungsgemäße Maßnahme kann die Sonnenblendenachse temperaturunabhängig wiederholt in die Lageröffnung des Lagerböckchens eingesteckt und wieder herausgezogen werden, weil der der Anlageebene zugelegene und damit im Einbauzustand unbelastete Arm immer federelastisch zurückweichen kann. Damit wird dann die Sperrwirkung der zwischen Lageröffnung und Einführschlitz vorgesehenen Hinterschneidung aufgehoben. Auch wird durch die erfindungsgemäße Maßnahme eine zu große Flächenpressung der die Lagerachse umgebenden Verkleidungsfolie und damit eine Beschädigung derselben beim Herunter- und Heraufklappen des Sonnenblendenkörpers vermieden. Andererseits kann die Federelastizität so gewählt werden, daß eine zuverlässige Halterung der Lagerachse mit insbesondere klapperfreiem Sitz gewährleistet ist. Insbesondere erlaubt die erfindungsgemäße Maßnahme den Einsatz eines Werkstoffes mit relativ hohem Elastizitäts-Modul, welcher in dem in der Praxis vorkommenden Temperaturbereich geringere Unterschiede als die herkömmlichen Lagerböckchen zeigt.

Die federelastische Verschwenkbarkeit des der Anlageebene benachbarten Armes kann in einfacher Weise dadurch erzielt werden, daß dieser gegenüber dem anderen Arm eine kleinere Querschnittsfläche besitzt.

Nach einer bevorzugten Ausgestaltung der Erfindung kann vorgesehen sein, daß der federelastische Arm vorzugsweise aus zwei im Abstand nebeneinander angeordneten Federzungen besteht, die jeweils einendig mit dem anderen Arm etwa dem Einführungsschlitz gegenüberliegend verbunden sind. Eine solche Ausgestaltung der Erfindung läßt eine beliebig starke Federung durch entsprechende Dimensionierung der die Federzungen begrenzenden Schlitze bzw. Schlitzlänge und des Federzungenquerschnittes erzielen.

Das Einstecken der Sonnenblendenachse in die Lageröffnung kann dadurch erleichtert werden, daß der Einführschlitz nach außen divergierende Schlitzwände besitzt. Dabei kann das freie Ende des federelastischen Armes an dem der Lageröffnung abgewandten Schlitzende liegen.

Die Erfindung läßt sich mit Vorteil auch dann verwirklichen, wenn der der Anlageebene benachbarte Arm doppelwandig ausgebildet ist, wobei die Wandungen auf Abstand voneinander verbunden sind, und wobei die schlitz- und lageröffnungsseitige Wandung eine gegenüber der anderen Wandung verringerte Querschnittsfläche besitzt. Dabei kann die an der Bildung des Einführschlitzes und der Lageröffnung beteiligte Wandung durch senkrecht zur Achse der Lageröffnung ausgerichtete Schlitze unterbrochen sein, wodurch sich Material einsparen und ein günstige Federwirkung erzielen läßt.

Auf der Zeichnung sind zwei Ausführungsbeispiele eines Lagerböckchens dargestellt, die im folgenden näher erläutert werden. Es zeigen:

Fig. 1 die Frontansicht eines teilweise im Schnitt dargestellten Lagerböckchens,

Fig. 2 einen Schnitt gemäß der Linie A—A nach Fig. 1 und

Fig. 3 einen Schnitt durch ein gegenüber Fig. 1 und 2 abgewandeltes Ausführungsbeispiel.

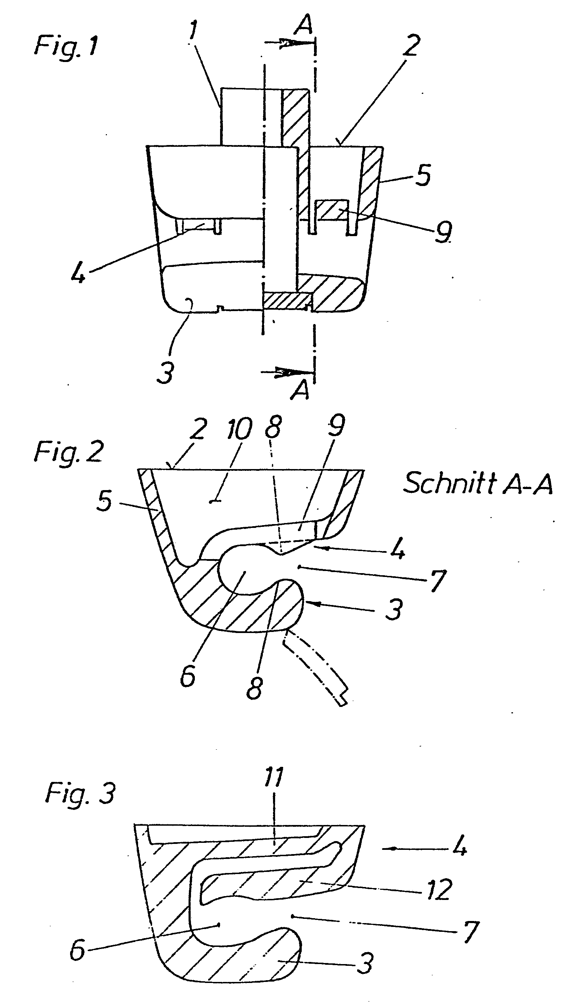

Das Lagerböckchen nach Fig. 1 besteht aus Kunststoff und weist einen im Querschnitt unrunden und damit das Largerböckchen gegen Verdrehen sichernden Befestigungszapfen 1 auf, der in Einbaulage einen Karosseriedurchbruch durchgreift. Der Befestigungszapfen 1 wird einendig durch eine sich gegen die gegebenenfalls mit einer Verkleidung versehene Karosserie abstützende Anlageebene 2 begrenzt. Von der Anlageebene 2 ausgehend besitzt das Lager-böckchen einen kastenförmigen Aufbau und an der der Anlageebene 2 abgewandten Seite zwei eine nicht gezeigte Sonnenblendenachse klammerartig umgreifende Arme 3, 4. Der Arm 3 ist starr mit dem kastenförmigen Gehäuse 5 verbunden und besitzt eine wesentlich größere Querschnittsfläche als der Arm 4. Nach Fig. 2 bilden die einander zugewandten Seiten der Arme 3, 4 eine Lageröffnung 6 und einen Einführschlitz 7 mit nach außen divergierenden Schlitzwänden. Zwischen der Lageröffnung 6 und dem Einführschlitz 7 sind Hinterschneidungen bildende Nocken 8 angeformt.

Wie die Fig. 1 und 2 zeigen, wird der Arm 4 aus zwei im Abstand voneinander angeordnete Federzungen 9 gebildet, die an der dem Einführschlitz 7 abgewandten Seite der Lageröffnung 6 mit dem Arm 3 verbunden sind. Beim Einstecken der Sonnenblendenachse können die Federzungen 9 federelastisch in Richtung der Anlageebene 2 zurückweichen, wozu das Gehäuse 5 im Rücken der Federzungen 9 mit einem Hohlraum 10 ausgebildet ist.

Das im Schnitt dargestellte Lagerböckchen nach Fig. 3 besitzt ebenfalls eine Anlageebene 2 und zwei eine Lageröffnung 6 und einen Einführschlitz 7 bildende Arme 3, 4. Dabei ist der Arm 4 doppelwandig ausgebildet und besteht aus den Wandungen 11, 12, die auf Abstand voneinander gehalten und nur an der Außenseite des Einführschlitzes 7 einstückig miteinander verbunden sind. Auch dei diesem Lagerböckchen ist ein einfaches Einstecken und Herausziehen der Sonnenblendenachse gewährleistet, weil die Wandung 12 in Richtung zur Wandung 11 zurückfedern kann.

## Patentansprüche

1. Lagerböckchen für Fahrzeugsonnenblenden, welches als Kunststoffspritzgußteil ausgeführt ist und zwei angeformte, eine Sonnenblendenachse klammerartig umgreifende Arme (3, 4) aufweist, deren einander zugewandte Seiten eine hinterschnittene Lageröffnung (6) für die Sonnenblendenachse und einen deren wiederholtes Einstecken in die Lageröffnung (6) ermöglichenden Einführschlitz (7) bilden, der etwa parallel zur Anlageebene (2) des Lagerböckchens an einer Fahrzeugkarosserie verläuft, dadurch gekennzeichnet, daß der der Anlageebene (2) benachbarte Arm (4) federelastisch in Richtung zur Anlageebene (2) verschwenkbar ist.

2. Lagerböckchen nach Patentanspruch 1, dadurch gekennzeichnet, daß der der Anlageebene (2) benachbarte Arm (4) eine gegenüber dem anderen Arm (3) kleinere Querschnittsfläche besitzt.

3. Lagerböckchen nach Patentanspruch 1 oder 2, dadurch gekennzeichnet, daß der federelastische Arm (4) vorzugsweise aus zwei im Abstand nebeneinander angeordneten Federzungen (9) besteht, die jeweils einendig mit dem anderen Arm (3) etwa dem Einführungsschlitz (7) gegenüberliegend verbunden sind.

4. Lagerböckchen nach einem oder mehreren der Patentansprüche 1 bis 3, dadurch gekennzeichnet, daß der Einführungsschlitz (7) nach außen divergierende Schlitzwände besitzt.

5. Lagerböckchen nach einem oder mehreren der Patentansprüche 1 bis 4, dadurch gekennzeichnet, daß das freie Ende des elastischen Armes (4) an dem der Lageröffnung (6) abgewandten Schlitzende liegt.

6. Lagerböckchen nach Patentanspruch 1, dadurch gekennzeichnet, daß der der Anlageebene (2) benachbarte Arm (4) doppelwandig ausgebildet ist, wobei die Wandungen (11, 12) auf Abstand voneinander verbunden sind und wobei die schlitz- und lageröffnungsseitige Wandung (12) eine gegenüber der anderen Wandung (11) verringerte Querschnittsfläche besitzt.

## Revendications

1. Petit palier de pivot pour pare-soleil de véhicule, formé par une pièce en matière synthétique moulée par injection, qui comporte deux bras (3, 4) obtenus au moulage, qui enserrent un axe de pare-soleil à la manière d'une pince et dont les côtés en regard présentent une ouverture de palier (6) creusée intérieurement pour recevoir l'axe du pare-soleil et une fente d'introduction (7) permettant son insertion réitérée dans l'ouverture (6), fente qui est sensiblement parallèle au plan d'application (2) du palier de pivot pour montage contre une carrosserie de véhicule, caractérisé en ce que le bras (4) voisin du plan d'application (2) est capable de pivoter élastiquement en direction du plan d'application (2).

2. Palier seion la revendication 1, caractérisé en ce que le bras (4) voisin du plan d'application (2) possède une surface de section transversale plus petite que celle de l'autre bras (3).

3. Palier selon la revendication 1 ou 2, caractérisé en ce que le bras élastique (4) est constitué de préférence par deux languettes élastiques (9) écartées et disposées l'une à côté de l'autre, qui sont rattachées chacune par une extrémité à l'autre bras (3), sensiblement en face de la fente d'indroduction (7).

4. Palier selon la revendication 1, 2 ou 3, caractérisé en ce que la fente d'introduction (7) présente des parois intérieures que vont en divergeant vers l'extérieur.

5. Palier selon l'une quelconque des revendications précédentes, caractérisé en ce que l'extrémité libre du bras élastique (4) est située à l'extrémité de fente opposée à l'ouverture de palier (6).

6. Palier selon la revendication 1, caractérisé en ce que le bras (4) voisin du plan d'application (2) comporte deux cloisons (11, 12) écartées l'une de l'autre, mais reliées entre elles, celle (12) située du côté de la fente et de l'ouverture de palier possédant une surface de section transversale reduite par rapport à l'autre cloison (11).

**Claims**

1. A plastics injection-moulded bearing block for a vehicle sun visor, the block having two integrally formed arms (3, 4) for clasping a sun visor shaft in clamp-like fashion, the opposing faces of the arms forming an undercut bearing aperture (6) for the sun visor shaft and an entry slot (7) permitting repeated insertion of the shaft into the bearing aperture (6), the slot extending substantially parallel with the bearing block's abutment plane (2) on a vehicle body, characterized in that the arm (4) closest to the abutment plane (2) is elastically sluable in the direction to the abutment plane (2).

2. A bearing block according to claim 1, characterized in that the cross-sectional area of the arm (4) closest to the abutment plane (2) is smaller than that of the other arm (3).

3. A bearing block according to claim 1 or claim 2, characterized in that the elastic arm (4) preferably consists of two resilient tongues (9) spacedly arranged side by side, and one end of each which is joined substantially opposite the entry slot (7) to the other arm (3).

4. A bearing block according to one or more of the claims 1 to 3, characterized in that the slot-defining walls of the entry slot (7) are outwardly diverging.

5. A bearing block according to any one or more of the claims 1 to 4, characterized in that the free end of the elastic arm (4) is disposed at the slot end remote from the bearing aperture (6).

6. A bearing block according to claim 1, characterized in that the arm (4) closest to the abutment plane (2) is double-walled, wherein the two walls (11, 12) although joined extend spacedly from each other, and wherein the cross-sectional area of the wall (12) closest to the slot and bearing aperture is less than that of the other wall (11).

**0 003 233**

Fig. 1

Fig. 2

Schnitt A-A

Fig. 3